# EUROPEAN PATENT APPLICATION

(11) **EP 3 623 453 A1**
(43) Date of publication of application: **18.03.2020**
(21) Application number: 19159618.8
(22) Date of filing: 27.02.2019
(51) Int. Cl.: C10J 3/30, C10J 3/72, C10J 3/84

(54) **ENRICHED AIR GASIFIER**

(30) Priority: 12.09.2018 US 201862730364 P; 10.01.2019 US 201916244872
(71) Applicant: Monte Cristo Gasifiers LLC, Roca, NE 68430 (US)
(72) Inventor: BLYTHE, David R., Roca, NE 68430 (US); HOHMAN, Jerrod, Roca, NE 68430 (US)
(74) Representative: Somervell, Thomas Richard

(57) **Abstract**

A method may include, but is not limited to: providing a volume of feedstock and a volume of oxygen-enriched air to a thermal reformer; reacting the volume of feedstock and the volume of oxygen-enriched air with the thermal reformer at an operating temperature to produce a raw syngas stream; removing particulate matter from the raw syngas stream with a two-stage cyclone assembly, wherein the two-stage cyclone assembly comprises a first cyclone and a second cyclone; scrubbing the raw syngas stream received from the two-stage cyclone assembly with a quench scrubber to produce an engine gas stream; and providing the engine gas stream to a CHP genset to be used as fuel.

## Description

### CROSS-REFERENCE TO RELATED APPLICATIONS

The present application claims priority to United States Provisional Patent Application Serial No. 62/730,364, entitled THERMAL BIOREFORMER, filed September 12, 2018, naming David R. Blythe and Jerrod Hohman as inventors, which is incorporated herein by reference in the entirety.

The present application claims priority to United States Patent Application Serial No. 16/244,872, entitled ENRICHED AIR GASIFIER, filed January 10, 2019, naming David R. Blythe and Jerrod Hohman as inventors, which is incorporated herein by reference in the entirety.

### TECHNICAL FIELD

The present invention generally relates to gasification, and more particularly, to enriched air gasification.

### BACKGROUND

Conventional gasifiers may be limited with respect to the feed materials which may be used. For example, conventional gasifiers may be limited in that they are only compatible with feed materials with a low ash percentage and/or low moisture level. Furthermore, conventional gasifiers may be unable to convert low-energy feed materials into high-energy gasses. Therefore, it would be desirable to provide a system and method that cure one or more of the shortfalls of previous approaches identified above.

### SUMMARY

An enriched air gasification system is disclosed, in accordance with one or more embodiments of the present disclosure. The system may include a thermal reformer configured to receive a volume of feedstock and a volume of oxygen-enriched air. The thermal reformer may be configured to react the volume of feedstock and the volume of oxygen-enriched air at an operating temperature to produce a raw syngas stream. The system may also include a two-stage cyclone assembly including a first cyclone and a second cyclone, wherein the two-stage cyclone assembly is configured to remove particulate matter from the raw syngas stream. The system may also include a quench scrubber configured to receive and scrub the raw syngas stream received from the two-stage cyclone assembly to produce an engine gas stream. The system may also include a combined heat and power generating set (CHP genset) configured to receive the engine gas stream and use the engine gas stream as fuel.

### BRIEF DESCRIPTION OF THE DRAWINGS

The numerous advantages of the disclosure may be better understood by those skilled in the art by reference to the accompanying figures in which:
FIG. 1A illustrates a process flow diagram of an enriched air gasification system;
FIG. 1B illustrates a process flow diagram of an enriched air gasification system;
FIG. 1C illustrates a process flow diagram of an enriched air gasification system;
FIG. 2 illustrates a simplified schematic diagram of an enriched air gasification system;
FIG. 3A illustrates a graph depicting syngas concentrations using air as a fluidization medium;
FIG. 3B illustrates a graph depicting syngas concentrations using 80% oxygen enriched air as a fluidization medium;
FIG. 4 illustrates a graph depicting syngas energy content at various reaction temperatures and oxygen concentrations; and
FIG. 5 illustrates a flowchart of a method for operating an enriched air gasification system.

### DETAILED DESCRIPTION OF THE INVENTION

The present disclosure has been particularly shown and described with respect to certain embodiments and specific features thereof. The embodiments set forth herein are taken to be illustrative rather than limiting. It should be readily apparent to those of ordinary skill in the art that various changes and modifications in form and detail may be made without departing from the spirit and scope of the disclosure.

Reference will now be made in detail to the subject matter disclosed, which is illustrated in the accompanying drawings.

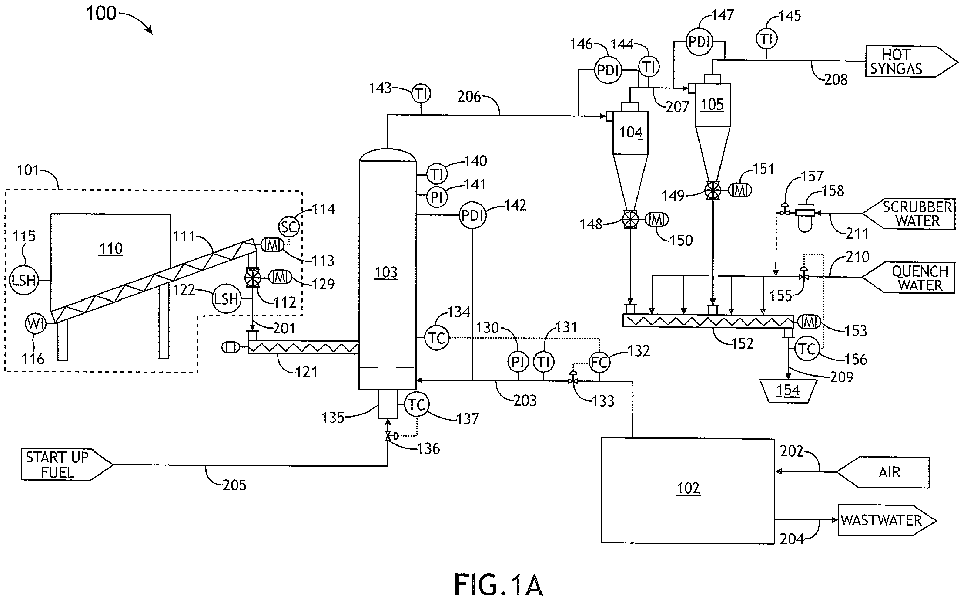

Referring generally to FIG. 1A through FIG. 6, embodiments of the present disclosure are generally directed to a system and method for enriched air gasification. Additional embodiments of the present disclosure are directed to an enriched air gasification system and method for converting low caloric content feedstocks, which would ordinarily be discarded as a waste product, into fuel which may be used to generate heat and power. Furthermore, embodiments of the present disclosure are directed to an enriched air gasification system and method which may utilize feed materials with high ash and/or moisture content levels. Additional embodiments of the present disclosure are directed to an enriched air gasification system for removing and cooling ash from a syngas product. The enriched air gasification system and method of the present disclosure may be configured to generate an engine gas (e.g., product syngas) which may be used for fuel in various operations including, but not limited to, internal combustion engines.

As noted previously herein, conventional gasifiers may be incompatible with feed materials with high ash percentages and/or high moisture percentages. For example, it has been found that conventional gasifiers may exhibit a 10% ash percentage limit. By way of another example, conventional gasifiers may be unable to process feed materials with moisture levels over 10-15%. In this regard, embodiments of the present disclosure are directed to an enriched air gasification system and method which may utilize feed materials with higher ash and moisture content levels. It is noted herein that, for the purposes of the present disclosure, the terms "feed material" and "feedstock" may be used interchangeably, unless noted otherwise herein.

FIGS. 1A-1C illustrate process flow diagrams of an enriched air gasification system 100. In one embodiment, gasification system 100 includes, but is not limited to, a feeder 101, an enriched air system 102 a thermal reformer 103, a first cyclone (e.g., Stage 1 cyclone 104, a second cyclone (e.g., Stage 2 cyclone 105), a syngas cooler 106, a quench scrubber 107, a fuel gas heater 108, and a combined heat and power generating set (CHP genset) (e.g., CHP genset 109).

It is contemplated herein that gasification system 100 may be sold, transported, and installed in a single, modularized package. By way of example, the various components of gasification system 100 may be packaged and delivered to an installation site in a standard shipping container. Similarly, it is contemplated herein that the gasification system 100 may be installed on a single skid which may be set on an existing pad without the need for any additional civil or structural infrastructure. Furthermore, gasification system 100 may be configured to require only single-point tie-ins for both water and power. In these embodiments, it is contemplated that gasification system 100 may be quickly and readily installed in a wide variety of locations, thereby adding to the versatility and utility of the gasification system 100.

As illustrated in FIG. 1A, feeder 101 may include a feed bin 110, a feed bin conveyor 111, and a feed valve 112. The feed bin 110 may include any storage device known in the art configured to receive and/or store feedstock including, but not limited to, one or more tanks, one or more bins, one or more silos, one or more troughs, and the like. Feedstock stored within feed bin 110 and used throughout gasification system 100 may include any carbon-containing fuel material including, but not limited to, animal manure (e.g., poultry manure, swine manure, dairy manure, cattle manure, and the like), anaerobic digestor effluent sludge (e.g., biogas plant effluent sludge), woodwaste, plastic, cardboard, refused derived fuel, tires, coal, concentrated rare earth elements recovered from ash, and the like. In another embodiment, feed bin 110 may be sized such that it may contain a particular weight or volume of feedstock. For example, feed bin 110 may be sized such that it may contain 8-12 hours worth of feedstock (e.g., feedstock required to operate gasification system 100 for 8-12 hours). Similarly, it is noted herein that various components of gasification system 100 may be altered, adjusted, and/or optimized on a bespoke basis based on the type of feedstock to be used in order to optimize the amount of heat and/or power generated by the gasification system 100.

It is noted herein that feedstocks with low BTU values generally produce a syngas with low BTU levels. Low-BTU level syngas exhibits a low methane number which is typically insufficient to power an internal combustion engine. Conversely, as noted previously herein, gasification system 100 may be configured to utilize low-energy (e.g., low BTU value), carbon-containing products as feedstock in order to produce a syngas (e.g., engine gas) which may be used to operate internal combustion engines. In this regard, gasification system 100 may utilize feedstock which would otherwise be considered waste materials, thereby reducing overall disposable waste and increasing energy efficiency. By utilizing enriched air, gasification system 100 may enhance the conversion process of the feedstock within the thermal reformer 103 to produce a syngas with a higher CO content. Similarly, gasification system 100 may be configured to utilize feedstock with higher ash contents and/or higher moisture contents than may be used in conventional gasification systems. For example, feed bin 110 of gasification system 100 may be configured to receive feedstock with ash content levels of up to approximately 35%, whereas conventional gasification systems may only utilize feedstock with ash content levels of approximately 10%. It is contemplated herein that gasification system 100 may be configured to utilize higher ash content feedstocks due to the combination of a fluidized bed within the thermal reformer 103 (as opposed to a fixed-bed gasifier) along with a two-stage cyclone assembly, which may be able to remove a majority of the ash from the system.

Additionally, it is contemplated herein that gasification system 100 may be configured to utilize feedstock with higher moisture contents than may be used in conventional gasification systems. By quenching and cooling syngas containing high moisture levels, gasification system 100 may be configured to drop the moisture levels of the syngas in the quench system. The syngas may then be re-heated to a required temperature of an internal engine combustion, thereby allowing for the use of feedstock with higher moisture contents. For example, feed bin 110 of gasification system 100 may be configured to receive feedstock with moisture contents up to approximately 30%, whereas conventional gasification systems may only utilize feedstock with moisture content levels of approximately 10-15%. Therefore, as compared to conventional gasification systems, the gasification system 100 of the present disclosure may utilize a wider array of feed materials, thereby increasing the versatility of gasification system 100.

The feed bin conveyor 111 of feeder 101 may include any apparatus configured to receive feedstock from the feed bin 110 and deliver the feedstock to the feed valve 112. For example, feed bin conveyor 111 may include, but is not limited to, a conveyor belt, a feed auger, and the like. In one embodiment, the feed bin conveyor 111 may be communicatively coupled to a motor 113 which may be communicatively coupled to a speed controller 114. The speed controller 114 may include any type of speed controller known in the art configured to control the feed rate of feedstock to the feed valve 112 and/or thermal reformer 103 including, but not limited to, a variable frequency drive (VFD). Similarly, feed valve 112 may be mechanically and/or electrically coupled to a motor 129 configured to control the feed rate of feedstock to the feed conveyor 121. In embodiments, the speed controller 114 (e.g., VFD) of the feed bin conveyor 111 may be set to a sufficient speed to ensure feedstock does not accumulate in the feed bin conveyor 111. In additional and/or alternative embodiments, the speed controller 114 (e.g., VFD) of the feed bin conveyor 111 may be set to a sufficient speed to ensure feedstock does not begin to reform within the feed bin conveyor 111 before entering the thermal reformer 103.

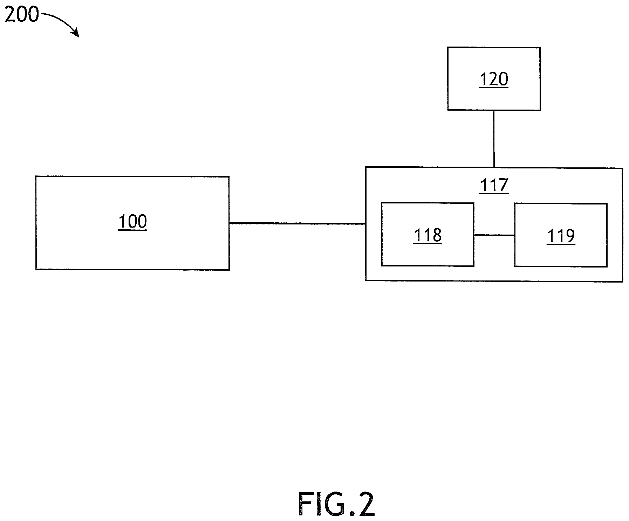

It is contemplated herein that the motor 113, motor 129, and/or the speed controller 114 may be communicatively coupled to a controller to control the feed rate of feedstock stored within feed bin 110. A controller will be discussed in further detail herein with respect to FIG. 2.

In another embodiment, feed bin conveyor 111 and/or feed bin 110 may include a high-level switch 115 (LSH) and/or a weight indicator 116. The high-level switch 115, and/or weight indicator 116 may be configured to identify the amount of feedstock within the feed bin 110, the amount of feedstock within the feed bin conveyor 111, and the like. For example, high-level switch 115 may be configured to identify when there is a blockage in the feed bin 110 and/or feed bin conveyor 111. By way of another example, weight indicator 116 may include weight cells on the legs of the feed bin 110. In some embodiments, the speed controller 114, high-level switch 115, and/or weight indicator 116 are configured to identify and control the amount of feedstock being fed into the thermal reformer 103.

It is noted herein that various components of the present disclosure may be communicatively coupled to a controller of gasification system 100. The use of a controller coupled to gasification system 100 may be further understood with reference to FIG. 2.

FIG. 2 illustrates a simplified schematic diagram of an enriched air gasification system 200. In embodiments, system 200 includes gasification system 100, a controller 117, and a user interface 120. In one embodiment, the controller 117 includes one or more processors 118 and memory 119. In one embodiment, controller 117 is communicatively coupled to gasification system 100. In embodiments, the one or more processors 118 may be configured to execute a set of program instructions stored in memory 119, the set of program instructions configured to cause the one or more processors 118 to carry out the various steps or commands of the present disclosure. By way of example, the speed controller 114, high-level switch 115, and weight indicator 116 may be communicatively coupled to controller 117 and configured to transmit time-stamped data and/or alerts to controller 117. In this regard, the controller 117 of system 200 may be configured to automatically adjust one or more characteristics of gasification system 100 in response to data and/or one or more alerts received from various components of gasification system 100.

In an additional and/or alternative embodiment, controller 117 of system 200 may be configured to receive one or more input commands from a user via a user interface 120 in response to data and/or one or more alerts received from various components of gasification system 100. In this regard, user interface 120 may be configured to display data of gasification system 100 and system 200 to a user.

It is contemplated herein that controller 117 and/or user interface 120 may be located proximate and/or remotely with respect to gasification system 100. In this regard, it is contemplated that controller 117 and/or user interface 120 may be communicatively coupled to gasification system 100 and/or the various components of gasification system 100 via any wireline and/or wireless technique known in the art including, but not limited to, GSM, GPRS, CDMA, EV-DO, EDGE, WiMAX, 3G, 4G, 4G LTE, 5G, WiFi protocols, Bluetooth protocols, RF, LoRa, and the like. By way of another example, controller 117 may be communicatively coupled to gasification system 100 via a networked, cloud-based architecture.

Furthermore, it is contemplated herein that various components of gasification system 100 may be directly and/or indirectly communicatively coupled to controller 117. For example, the various indicators, controllers, and the like (e.g., temperature indicators/controllers, pressure indicators/controllers, flow indicators/controllers, weight indicators, high level switches, and the like) may be directly coupled to controller 117 such that data collected by the various components is directly transmitted to the controller 117. In an additional and/or alternative design, the various indicators, controllers, and the like, may be indirectly coupled to controller 117 such that the various components transmit data to an intermediate component (e.g., intermediate controller, intermediate concentrator, and the like) which may then directly and/or indirectly transmit data to controller 117.

It is contemplated herein that embodiments with controller 117 communicatively coupled to gasification system 100 may allow for remote monitoring and controlling of gasification system 100. Furthermore, embodiments with controller 117 communicatively coupled to gasification system 100 may promote reliability and decrease the need for on-site technical support. As such, system 200 may effectively reduce trouble-shooting costs, provide an early warning system for operators, and reduce the time required for on-site operators. It is further contemplated herein that controller 117 may be configured to control and receive data from one or more gasification systems (e.g., gasification system 100). For example, a facility with a first gasification system 100a and a second gasification system 100b may include a single controller 117 configured to remotely monitor and control the first gasification system 100a and the second gasification system 100b.

Reference will again be made to FIG. 1A. In another embodiment, feed bin conveyor 111 is configured to deliver feedstock to a feed valve 112. The feed valve 112 may be configured to control the feed rate of feedstock (e.g., feedstock input stream 201) into the thermal reformer 103. The feed valve 112 may include any apparatus known in the art including, but not limited to, a rotary airlock valve. In another embodiment, feed valve 112 is configured to deliver feedstock to a feed conveyor 121. In embodiments, feed valve 112 delivers feedstock to the feed conveyor 121 via a chute equipped with a high level switch 122. The high level switch 122 may be configured to determine when and/or if there is a blockage in the feed conveyor 121. In this regard, it is noted herein that the description associated with high-level switch 115 may be regarded as applying to high level switch 122 and vis versa, unless noted otherwise herein.

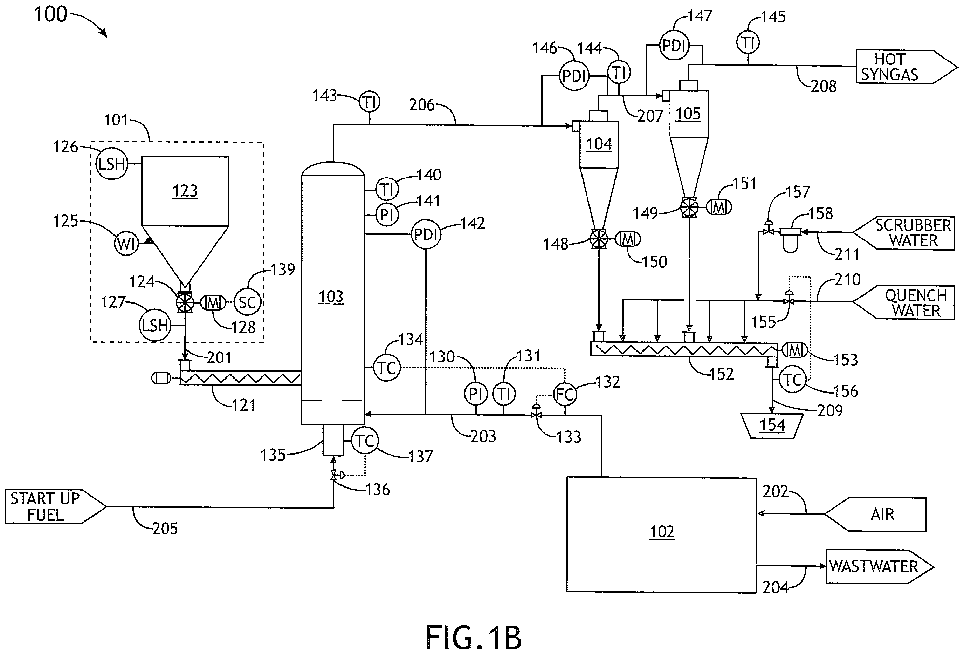

It is noted herein that feeder 101 as shown in FIG. 1A is provided for illustrative purposes, and is not to be regarded as limiting. In this regard, feeder 101 may take varying forms depending on any number of factors including, but not limited to, customer preferences, space constraints, type of feedstock to be used, desired power output, and the like. By way of example, FIG. 1B illustrates gasification system 100 with an additional and/or alternative feeder 101 design.

FIG. 1B illustrates a process flow diagram of an enriched air gasification system 100, in accordance with one or more embodiments of the present disclosure. In one embodiment, as illustrated in FIG. 1B, feeder 101 includes, but is not limited to, a gravity feed bin 123, feed valve 124, weight indicator 125, high level switch 126, and high level switch 127.

The gravity feed bin 123 may be mounted above the feed conveyor 121 and configured to utilize gravity to deliver feedstock to the feed conveyor 121 via feed valve 124. The feed valve 124 may be communicatively coupled to a motor 128, which may be communicatively coupled to a speed controller 139. It is noted herein that the description associated with feeder 101 as illustrated in FIG. 1A may be considered to apply to feeder 101 as illustrated in FIG. 1B, unless noted otherwise herein.

Reference will again be made to FIG. 1A. In one embodiment, gasification system 100 includes enriched air system 102. The enriched air system 102 may be configured to receive an air input stream 202 and generate/deliver an enriched air input stream 203 to the thermal reformer 103. The enriched air system 102 may generate a wastewater stream 204 which may be discarded, used for various other operations, filtered/purified, and the like. The enriched air system 102 may include any apparatus or sub-system known in the art for generating a stream of oxygen-enriched air. For example, enriched air system 102 may be configured to generate and direct enriched air input stream 203 containing air with an oxygen content of around 30-85%. For instance, the enriched air of enriched air input stream 203 may comprise 85% oxygen (O₂) and 15% nitrogen (N₂).

In embodiments, the enriched air of the enriched air input stream 203 acts both as fluidization medium (e.g., fluidization air) and a gasification reactant within gasification system 100. It is contemplated herein that the use of enriched air as both fluidization media and a gasification reactant may allow gasification system 100 to convert low-energy feedstocks into high-energy syngas, which may then be used as fuel in various processes. It is further contemplated that the use of enriched air may allow gasification system 100 to produce a syngas product with an energy value of 2-3 times that of syngas products produced by conventional systems. For instance, a conventional gasifier may be capable of producing a syngas product with around 100 BTU/SCF, whereas gasification system 100 may produce a syngas product with around 200 BTU/SCF.

It is contemplated herein that the temperature and pressure of enriched air input stream 203 may be monitored by a pressure indicator 130 (PI) and a temperature indicator 131. In another embodiment, the flow rate of enriched air input stream 203 into thermal reformer 103 may be controlled by flow controller 132, which may be communicatively coupled to a control valve 133. Similarly, it is contemplated that flow controller 132 may be communicatively coupled to a temperature controller 134 configured to determine and control the temperature within thermal reformer 103. In this regard, it is contemplated that the flow controller 132 may adjust the flowrate (either automatically or in response to a user input command) of enriched air input stream 203 into thermal reformer 103 based on the temperature of the thermal reformer 103.

In embodiments, thermal reformer 103 may be configured to burn start-up fuel within start-up fuel stream 205 with a start-up burner 135. It is contemplated herein that burning start-up fuel via start-up burner 135 may assist gasification system 100 during the start-up procedure by heating up the fluidization media (e.g., fluidization media in enriched air input stream 203) to the operating temperature. Start-up fuel in start-up fuel stream 205 may include any start-up fuel known in the art including, but not limited to, propane. In another embodiment, the flow rate of start-up fuel into the thermal reformer 103 is controlled by a control valve 136. In another embodiment, the temperature of start-up fuel stream 205 is controlled by a temperature controller 137. In embodiments, control valve 136, temperature controller 137, and/or start-up burner 135 may be controlled by controller 117. In additional and/or alternative embodiments, control valve 136, temperature controller 137, and/or start-up burner 135 may be controlled by a system or apparatus separate from controller 117 of system 200.

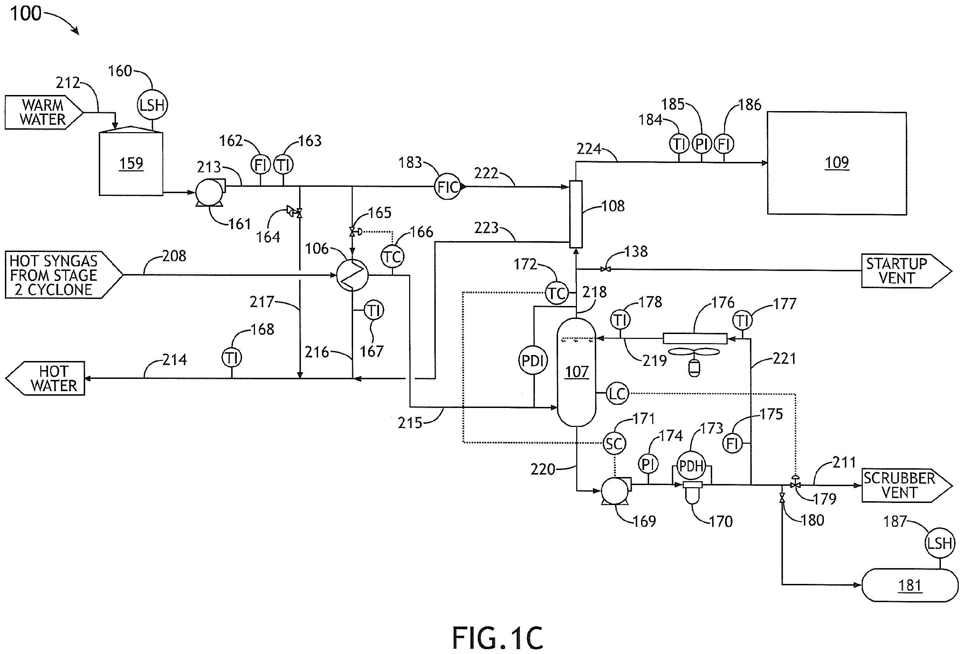

During the start-up procedure, the thermal reformer 103 may be slowly heated to an operating temperature, which may be set by the controller 117 automatically and/or by a user via user interface 120. It is noted herein that allowing thermal reformer 103 to slowly heat up to the operating temperature may allow the refractory to uniformly reach the operating temperature. In embodiments, vent valve 138 (illustrated in FIG. 1C) downstream of quench scrubber 107 may be opened during the pre-heating/start-up procedure to allow flue gas from the start-up burner 135 to preheat components of gasification system 100 (e.g., fuel gas heater 108, and the like) and/or exit to the atmosphere. In some embodiments, the thermal reformer 103 may be heated up to the operating temperature prior to feedstock and/or enriched air being fed into the thermal reformer 103. For example, the start-up burner 135 may first heat up the thermal reformer 103. Once the thermal reformer 103 has reached (or nearly reached) the operating temperature, the start-up burner 135 may be turned off, and feedstock input stream 201 and enriched air input stream 203 may begin to feed into the thermal reformer 103.

Following the introduction of feedstock input stream 201 and enriched air input stream 203 into the thermal reformer 103, it may take several minutes for the temperature in the thermal reformer 103 to stabilize. Once the temperature has stabilized, the vent valve 138 may be closed, and the CHP genset 109 may be started. Furthermore, gasification system 100 may exhibit a self-sustaining reaction (e.g., self-sustaining without the need for start-up fuel) once the thermal reformer 103 has reached the operating temperature.

As may be seen in FIG. 1A, the thermal reformer 103 may have two input streams and a single output stream: a feedstock input stream 201, an enriched air input stream 203 as inputs, and a raw syngas stream 206 as an output. In embodiments, the feedstock input stream 201 may be introduced into a fluidized bed of the thermal reformer 103 via the feed conveyor 121. The enriched air input stream 203may enter the thermal reformer 103 through an air plenum below the fluidization bed via an air distribution structure.

The ratio of enriched air to feedstock fed into the thermal reformer 103 may be based on a number of factors including, but not limited to, the type of feedstock, the operating temperature of the thermal reformer 103, syngas output flow rates, the flow rates of the feedstock input stream 201 and the enriched air input stream 203, desired and/or calculated conversion percentages, and the like. In embodiments, ratios of enriched air to feedstock may be stored in memory 119 for various feedstocks such that controller 117 may set the ratio based on the feedstock or other operating characteristics. The flow rate of feedstock, and therefore the ratio of feedstock to enriched air, may be altered or modified by altering the speed of feed valve 112 or feed valve 124 based on feedstock weigh calculations determined by weight indicator 116 or weight indicator 125. The ratio of feedstock to enriched air may be calculated using any units known in the art including, but not limited to, (kg of feedstock)/(kg of enriched air). Furthermore, it is contemplated herein that varying the feed rates and/or ratio of feedstock to enriched air may alter the temperature within thermal reformer 103.

In one embodiment, the fluidization bed of thermal reformer 103 exhibits a single bubbling bed gasifier configuration. In another embodiment, reformation of the feedstock within thermal reformer 103 takes place at low pressure. For example, reformation of the feedstock within thermal reformer 103 may take place at approximately atmospheric pressure. It is further noted herein, however, that syngas provided to the CHP genset 109 may be required to be maintained at a particular pressure. For example, syngas provided to the CHP genset 109 may have to be maintained at or around 50 mbar. Furthermore, due to variable pressure drops throughout the gasification system 100 (e.g., across thermal reformer 103, two-stage cyclone assembly, heat exchangers, quench scrubber 107, and the like) the pressure within the thermal reformer 103 may be adjusted in order to ensure a syngas of a particular pressure to the CHP genset 109. For instance, in order to account for pressure drops across gasification system 100 and to provide a syngas to the CHP genset 109 at 50 mbar, the thermal reformer 103 may be configured to operate between approximately 100-200 mbar. It is further noted herein that a single bubbling bed gasifier configuration may enable the thermal reformer 103 to operate across a wider range of pressures in order to account for pressure drops throughout the system.

In embodiments, the operating temperature of thermal reformer 103 may vary between 550°C and 850°C in order to maximize feedstock/carbon conversion. The temperature within thermal reformer 103 may vary based on a number of factors including, but not limited to, flow rates of feedstock input stream 201 and enriched air input stream 203, the type of feedstock being reformed, biochar properties of the feedstock, and the like. As noted previously herein, optimal operating temperatures for various feedstocks and/or other characteristics of gasification system 100 may be stored in memory 119 of controller 117. During operation, the temperature of the reformation process within the thermal reformer 103 may be monitored in the fluidization bed and within the upper zone of the thermal reformer 103. For example, the temperature within the fluidization bed may be monitored by temperature controller 134 and/or temperature controller 137. Similarly, by way of another example, the temperature and pressure within the upper zone of the thermal reformer 103 may be monitored by temperature indicator 140 and pressure indicator 141. In this regard, the pressure and temperature of the raw syngas stream 206 exiting the thermal reformer 103 may be monitored.

It is contemplated herein that the gasification system 100 of the present disclosure may be scaled on a bespoke basis according to the particular needs of a user. For example, a single thermal reformer 103 of the gasification system 100 may constitute a modular and scalable reformer capable of processing 250 kg/hr of feedstock to 5,000 kg/hr of feedstock. Similarly, the output of the thermal reformer 103 may be scaled accordingly. For example, the output of the thermal reformer 103 may be approximately 420 kW/hr. By way of another example, the output of the thermal reformer 103 may be approximately 10,000 kW/hr. The ability to scale and customize various characteristics (e.g., feedstock reformation rates and thermal reformer 103 output) of the gasification system 100 may increase the versatility and utility of the present disclosure, thereby lending itself to a wide variety of fields, users, and applications.

A pressure differential indicator(PDI 142) may be configured to monitor a pressure differential between the fluidization air (e.g., enriched air input stream 203) and a pressure within an upper region of the thermal reformer 103, as shown in FIGS. 1A-1B. It is noted herein that monitoring this pressure differential may help monitor the fluidization bed depth. A small portion of fluidization material is carried off from the thermal reformer 103 within the raw syngas stream 206. As such, monitoring the fluidization bed depth via PDI 142 may help indicate when additional fluidization material must be added.

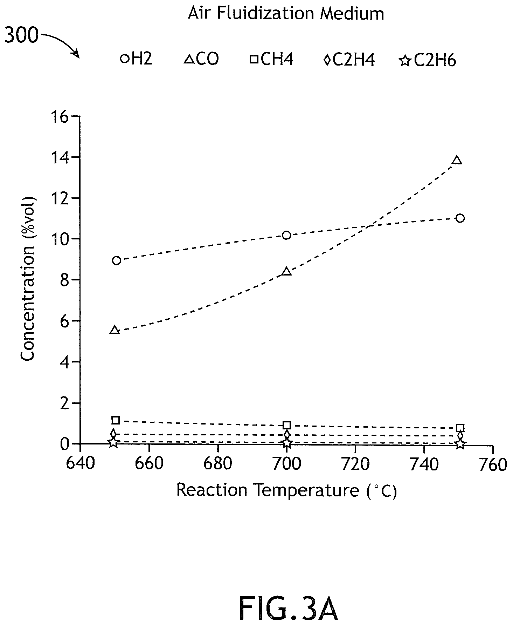

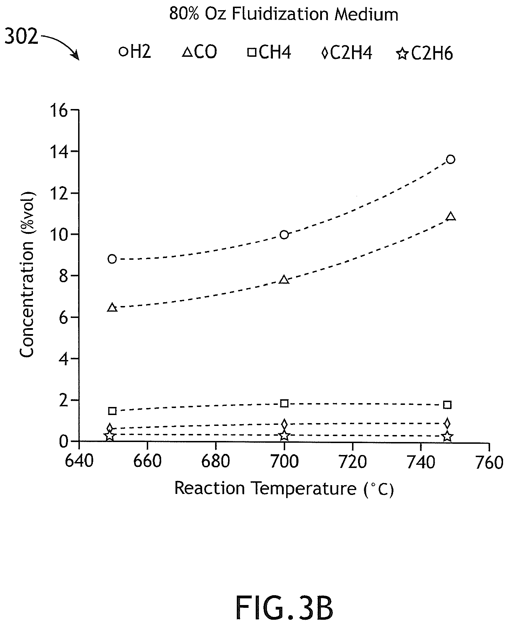

The effect of oxygen content within enriched air input stream 203 on the energy content levels of the syngas produced by gasification system 100 may be better understood with reference to FIG. 3.

FIGS. 3A-3B illustrate graphs 300 and 302depicting syngas concentrations using various fluidization media, in accordance with one or more embodiments of the present disclosure. More particularly, FIG. 3A illustrates a graph 300 depicting syngas concentrations using air as a fluidization medium, while FIG. 3B illustrates a graph 302depicting syngas concentrations using 80% oxygen enriched air as a fluidization medium. Comparing FIGS. 3A and 3B, it may be seen that utilizing 80% oxygen enriched air may result in a syngas with significantly higher hydrogen (H₂) and carbon monoxide (CO) concentrations as compared to syngas produced utilizing air as the fluidization medium.

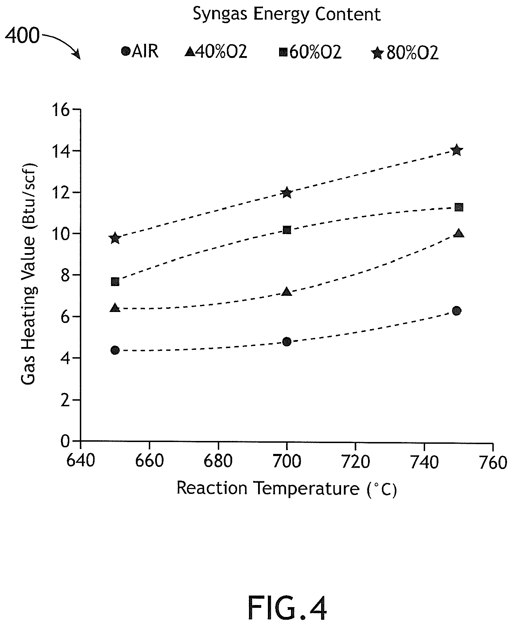

FIG. 4 illustrates a graph 400 depicting syngas energy content at various reaction temperatures and oxygen concentrations. As can be seen in graph 400, higher reaction temperatures and higher oxygen-content fluidization mediums have been found to produce higher energy content syngas products.

Reference will again be made to FIG. 1A. After exiting the thermal reformer 103, the raw syngas stream 206 may be directed to a two-stage cyclone assembly including a first cyclone (e.g., Stage 1 cyclone 104) and at least a second cyclone (e.g., Stage 2 cyclone 105). Multiple temperature indicators (e.g., temperature indicator 143, temperature indicator 144, temperature indicator 145, and the like) may be configured to determine the temperature of the raw syngas stream 206 before the Stage 1 cyclone exit stream 207, after the Stage 1 cyclone exit stream 207, and after the Stage 2 cyclone exit stream 208, respectively. The temperature indicator 143, temperature indicator 144, and temperature indicator 145 may be further configured to transmit time-stamped temperature readings to controller 117. It is noted herein that the Stage 2 cyclone exit stream 208 may also be referred to as the hot syngas stream 208, and the terms may be considered to be synonymous unless noted otherwise herein.

In one embodiment, the thermal reformer 103 may be configured to maintain the raw syngas stream 206 at a sufficiently high temperature as it travels through the two-stage cyclone assembly. It is noted herein that the raw syngas stream 206 may include biochar, ash, and other particulates generated in the thermal reformer 103. Accordingly, the two-stage cyclone (e.g., Stage 1 cyclone 104 and the Stage 2 cyclone 105) may be configured to continuously remove biochar, ash, and other particulates from the raw syngas stream 206. In embodiments, Stage 1 cyclone 104 is configured to remove the majority of the biochar and particulate matter from the raw syngas stream 206. In further embodiments, the Stage 2 cyclone 105 is configured to remove fine biochar and particulate matter from the Stage 1 cyclone exit stream 207 which was not removed by the Stage 1 cyclone 104. In this example, the Stage 1 cyclone 104 may be considered a "high-efficiency" cyclone, and the Stage 2 cyclone 105 may be considered a "low-efficiency" cyclone. It is contemplated herein that the two-stage cyclone assembly of the gasification system 100 may allow for the efficient conversion of feedstocks with high ash contents. For example, the two-stage cyclone assembly may be configured to convert feedstocks with up to approximately thirty-five percent ash contents.

Pressure differential indicators (e.g., PDI 146 and PDI 147) may be configured to monitor pressure differentials across the Stage 1 cyclone 104 and the Stage 2 cyclone 105, respectively. It is noted herein that changes in pressure across either the Stage 1 cyclone 104 or the Stage 2 cyclone 105 may indicate clogging or plugging of the cyclones, and may further indicate a need to change the speed of the ash removal from the two-stage cyclone assembly. Accordingly, monitoring pressure differentials across the two-stage cyclone assembly may help monitor the performance of the ash removal process.

Stage 1 cyclone 104 and Stage 2 cyclone 105 may include valves (e.g., valve 148 and valve 149) configured to remove biochar and particulate matter from each of the cyclones, respectively. The valves (e.g., valve 148 and valve 149) may include any type of valves known in the art including, but not limited to, rotary valves. In embodiments, valve 148 and valve 149 may be mechanically coupled to motor 150 and motor 151, which may be configured to control the speed of the rotary valves (e.g., valve 148 and valve 149). The motor 150 and motor 151 may be communicatively coupled to controller 117 such that the controller may control the respective speeds automatically and/or in response to one or more user inputs. In another embodiment, valve 148 and valve 149 are configured to prevent air from entering gasification system 100 through the Stage 1 cyclone 104 and Stage 2 cyclone 105.

In embodiments, valve 148 and valve 149 may drop and/or direct biochar and particulate matter removed by the two-stage cyclone assembly onto a conveyor 152. The conveyor 152 may include any assembly configured to transport biochar and particulate matter from the two-stage cyclone assembly including, but not limited to, a conveyor belt, an auger, and the like. In this regard, conveyor 152 may be mechanically coupled to a motor 153 which is configured to control the speed of the conveyor 152. During operation, the conveyor 152 may continuously and/or periodically transport biochar and particulate matter into a biochar stream 209 and direct the biochar stream 209 to a biochar container 154. The biochar container 154 may include any storage device known in the art including, but not limited to, one or more tanks, one or more bins, and the like. Biochar material produced by gasification system 100 may be discarded as waste product, or may be utilized by a user for one or more outside systems or operations (e.g., feedstock drying, hot water uses, production of steam, irrigation, heating systems, and the like).

Biochar and particulate matter may be cooled as it is transported on the conveyor 152. For example, a spraying system may be configured to spray the biochar/particulate matter on the conveyor 152 in order to cool the biochar/particulate matter. For instance, a quench water stream 210 may be directed to the biochar/particulate matter via a spraying manifold including one or more sprayers. The flow of the quench water stream 210 may be controlled by a control valve 155. The control valve 155 may be communicatively coupled to a temperature controller 156 such that the flow rate of the quench water stream 210 may be controlled based on the temperature of the biochar stream 209. By way of example, biochar and particulate matter may have to be cooled to a sufficiently low temperature in order to ensure safe disposal. For example, the biochar material may have to be cooled to approximately 80°C to ensure safe disposal. Accordingly, control valve 155 may increase the flow rate of quench water stream 210 when the temperature controller 156 indicates the temperature of the biochar stream 209 is too high, and may decrease the flow rate of quench water stream 210 when the temperature controller 156 indicates the temperature of the biochar stream 209 is too low.

In another embodiment, a scrubber water stream 211 from later in gasification system 100 (e.g., from the recirculation loop of the quench scrubber 107) may be used to recycle water and to supplement quench water stream 210. Similarly, the flow rate of scrubber water stream 211 may be controlled by a control valve 157. Furthermore, scrubber water stream 211 may be filtered by water filter 158 prior to being used to cool biochar matter on the conveyor 152. The generation of scrubber water stream 211 will be discussed in further detail herein with reference to FIG. 1C.

FIG. 1C illustrates a process flow diagram of enriched air gasification system 100, in accordance with one or more embodiments of the present disclosure.

In embodiments, a water input stream 212 may be provided to a water tank 159. A high level switch 160 may be communicatively and/or mechanically coupled to water tank 159. The high level switch 160 may be configured to determine the water level within water tank 159 and prevent the water tank 159 from overflowing. A pump 161 may be configured to control the flowrate of water stream 213 out of water tank 159. The water stream 213 may further be equipped with a flow indicator 162 and a temperature indicator 163. A control valve 164 may be configured to divert a portion of water from water stream 213 and direct the portion of water (e.g., water stream 217) to a hot water stream 214, which may then be utilized by a user for one or more outside systems of processes. Similarly, a control valve 165 may be configured to divert a portion of water from water stream 213 and direct the portion of water to syngas cooler 106.

The hot syngas stream 208 from the Stage 2 cyclone 105 (e.g., Stage 2 cyclone exit stream 208) may have to be cooled and conditioned before it may be used to generate energy in the CHP genset 109. Cooling and conditioning the hot syngas stream 208 may serve both to recover usable heat from the hot syngas stream 208, as well as to further remove biochar, tar, and other particulates. In this regard, the hot syngas stream 208 and a water stream 213 may be directed to syngas cooler 106 as input streams, and cool syngas stream 215 and water stream 216 flow from syngas cooler 106 as exit streams.

The syngas cooler 106 may be configured to lower the temperature of the hot syngas stream 208 several hundred degrees, where the temperature difference between the hot syngas stream 208 and the cool syngas stream 215 is a function of the flowrates and temperatures of the input hot syngas stream 208 and water stream 213. By way of example, the hot syngas stream 208 may enter the syngas cooler 106 at approximately 700°C, and the cool syngas stream 215 may exit the syngas cooler 106 at approximately 150°C. Conversely, the water entering the syngas cooler 106 may be heated. For example, the water stream 213 may enter the syngas cooler 106 at approximately 70°C, and the water stream 216 may exit the syngas cooler 106 at approximately 90°C. It is noted herein that the examples provided herein are for illustrated purposes only, unless noted otherwise herein.

It is further noted herein that the syngas cooler 106 may increase the efficiency and productivity of the gasification system 100 by recovering heat produced throughout the system. By way of example, the syngas cooler 106 may be capable of recovering approximately 250 kW/hr. By way of another example, the syngas cooler 106 may be capable of recovering approximately 7,000 kW/hr. It is noted herein that the heat/energy recovery of the syngas cooler 106 may be based on a number of factors including, but not limited to, the type of feedstock being used, the output of the thermal reformer 103, the type of syngas cooler 106, and the like.

In embodiments, the exit streams of the syngas cooler 106 (e.g., the cool syngas stream 215 and the water stream 216) may be equipped with a temperature controller 166 and a temperature indicator 167. In another embodiment, the temperature controller 166 may be communicatively coupled to the control valve 165 such that the flow rate of water through control valve 165 into the syngas cooler 106 may be adjusted based on the temperature of the cool syngas stream 215 exiting the syngas cooler 106. In embodiments, water stream 216 may be added to hot water stream 214 and used throughout gasification system 100, as discussed previously herein. Furthermore, the temperature of hot water stream 214 may be monitored by a temperature indicator 168.

The cool syngas stream 215 may pass through a spray ring and be directed to the quench scrubber 107. The quench scrubber 107 may be configured to further cool and condition the cool syngas stream 215 by directly contacting the cool syngas stream 215 with a quench water recirculation loop. For example, the cool syngas stream 215 may enter the quench scrubber 107 at approximately 150°C and exit the quench scrubber 107 as an engine gas stream 218 (e.g., product syngas stream) at approximately 25°C. Furthermore, direct contact with the quench water recirculation loop within the quench scrubber 107 may be further remove biochar, tar, and other particulate matter remaining in the cool syngas stream 215 which was not removed by the Stage 1 cyclone 104 or the Stage 2 cyclone 105. It is noted herein that the terms "recirculation loop," "quench water recirculation loop," and like terms may be considered synonymous for the purposes of the present disclosure.

The quench water recirculation loop may include a scrubber water input stream 219 entering the quench scrubber 107, and a scrubber water output stream 220 exiting the quench scrubber 107. A pump 169 may be configured to receive the scrubber water output stream 220 and direct the stream to a water filter 170. In embodiments, the pump 169 may be communicatively coupled to a speed controller 171. The speed controller 171 may further be communicatively coupled to a temperature controller 172 such that the speed controller 171 may adjust the speed of pump 169 based on the temperature readings of engine gas stream 218. In this regard, the pump 169, speed controller 171, and/or temperature controller 172 may be communicatively coupled to controller 117 such that the controller 117 may control the flow rate of water throughout the quench water recirculation loop to ensure the engine gas stream 218 is sufficiently cooled and purified. The water filter 170 may include any filter known in the art configured to remove tar and particulate matter impurities from the scrubber water output stream 220 including, but not limited to, a duplex filter/strainer, activated carbon filters, reverse osmosis (RO) filters, and the like.

During operation, some particulate matter carries over from the two-stage cyclone assembly and is removed by the water filter 170. As particulate matter is captured by the water filter 170, it will clog the filter, causing a rise in pressure. In this regard, a pressure differential indicator (e.g., PDI 173) may be configured to monitor pressure buildup across the water filter 170When the pressure differential across the water filter 170 reaches a pre-set pressure differential limit, the controller 117 may be configured to alert a user to change and/or clean the filter of the water filter 170.

In another embodiment, the quench water recirculation loop includes a pressure indicator 174, a flow indicator 175, and an air chiller 176. The air chiller 176 may include any air chiller known in the art configured to cool the recirculating quench water. For example, a recirculating quench water stream 221 entering the air chiller 176 may be cooled such that the scrubber water input stream 219 exiting the air chiller 176 is approximately 22°C. A temperature indicator 177 and a temperature indicator 178 may be configured to determine the temperature of the recirculating quench water entering and exiting the air chiller 176.

In embodiments, a control valve 179 may be configured to direct a portion of water to the scrubber water stream 211, which may be used elsewhere in gasification system 100. For example, as discussed previously herein, scrubber water stream 211 may be used to cool biochar and particulate matter on conveyor 152 following the two-stage cyclone assembly. In another embodiment, a gate valve 180 may be configured to direct a portion of scrubber water output stream 220 to a wastewater container 181. The wastewater container 181 may include any storage device known in the art including, but not limited to, one or more tanks, one or more bins, and the like. Additionally, a high level switch 187 may be communicatively and/or mechanically coupled to water tank 159. The high level switch 160 may be configured to determine the water level within wastewater container 181 and prevent the wastewater container 181 from overflowing.

After exiting the quench scrubber 107, the cooled engine gas stream 218 may be re-heated by fuel gas heater 108 before entering the CHP genset 109. The fuel gas heater 108 may receive engine gas stream 218 and water heater input stream 222 as inputs, and form water heater output stream 223 and product engine gas stream 224 as outputs. For example, engine gas stream 218 may exit the quench scrubber 107 at approximately 25°C, and may be heated by the fuel gas heater 108 to approximately 25°C. The fuel gas heater 108 may include any heater or heat exchanger known in the art including, but not limited to, a U-bend heat exchanger. It is noted herein that the temperature difference between the engine gas stream 218 and the product engine gas stream 224 may be a function of the flowrates and temperatures of the water heater input stream 222 and the engine gas stream 218. Accordingly, the water heater input stream 222 may include a flow indicator/controller 183 which may be communicatively coupled to controller 117.

Following the fuel gas heater 108, the product engine gas stream 224 may be directed to the CHP genset 109. The product engine gas stream 224 may be equipped with a temperature indicator 184, a pressure indicator 185, and a flow indicator 186. In one embodiment, the product engine gas of the product engine gas stream 224 may be used to power one or more internal combustion gas engines. For example, the product engine gas may be used to power four, six, eight, twelve, sixteen, or twenty cylinder internal combustion gas engines. It is contemplated herein that one or more characteristics of gasification system 100 may be modified or adjusted to ensure the product engine gas stream 224 exceeds original equipment manufacturer (OEM) engine fuel requirements and/or support a minimum of eight-thousand operating hours a year. It is contemplated herein that the product engine gas stream 224 may have an energy content of approximately 10 Mj/Nm³ and 18 Mj/Nm³ depending on a number of factors including, but not limited to, the type of feedstock.

In some embodiments, product engine gas stream 224 may be fed into a caustic scrubber (not shown). It is noted herein that providing the product engine gas stream 224 to a caustic scrubber may remove up to 95% of the carbon dioxide (CO₂) from the product engine gas stream 224. It is further noted herein that removing carbon dioxide (CO₂) from the product engine gas stream 224 may significantly increase the energy level per unit volume of the product engine gas stream 224 (e.g., increase BTU/SCF value).

It is noted herein that the various indicators (e.g., TI, PI, FI), controller (e.g., TC, PC, FC, FIC), and the like, are provided solely for illustrative purposes. In this regard, gasification system 100 may include additional or fewer indicators or controllers. By way of example, it is contemplated that each stream may include each of the various indicators and/or controllers. By way of another example, it is contemplated that only streams leading to and from primary components of gasification system 100 may include indicators and/or controllers. Furthermore, it is contemplated that the various indicators (e.g., TI, PI, Fl, and the like) may include corresponding controllers (e.g., TC, PC, FC, and the like), unless noted otherwise herein.

It is further noted herein that the one or more components of gasification system 100 may be communicatively coupled to the various other components of gasification system 100 in any manner known in the art. For example, the various components of gasification system 100 may be communicatively coupled to each other and other components via a wireline (e.g., copper wire, fiber optic cable, and the like) or wireless connection (e.g., RF coupling, IR coupling, data network communication (e.g., 3G, 4G, 4G LTE, 5G, WiFi, WiMax, Bluetooth and the like).

In one embodiment, the one or more processors 118 may include any one or more processing elements known in the art. In this sense, the one or more processors 118 may include any microprocessor-type device configured to execute software algorithms and/or instructions. In one embodiment, the one or more processors 118 may consist of a desktop computer, mainframe computer system, workstation, image computer, parallel processor, or other computer system (e.g., networked computer) configured to execute a program configured to operate the gasification system 100, as described throughout the present disclosure. It should be recognized that the steps described throughout the present disclosure may be carried out by a single computer system or, alternatively, multiple computer systems. Furthermore, it should be recognized that the steps described throughout the present disclosure may be carried out on any one or more of the one or more processors 118. In general, the term "processor" may be broadly defined to encompass any device having one or more processing elements, which execute program instructions from memory 119. Moreover, different subsystems of the gasification system 100 may include processor or logic elements suitable for carrying out at least a portion of the steps described throughout the present disclosure. Therefore, the above description should not be interpreted as a limitation on the present disclosure but merely an illustration.

The memory 119 may include any storage medium known in the art suitable for storing program instructions executable by the associated one or more processors 118. For example, the memory 119 may include a non-transitory memory medium. For instance, the memory 119 may include, but is not limited to, a read-only memory (ROM), a random access memory (RAM), a magnetic or optical memory device (e.g., disk), a magnetic tape, a solid state drive and the like. In another embodiment, the memory 119 is configured to store data including, but not limited to, data received from various components (e.g., indicators, controllers, pumps, motors, and the like) of gasification system 100. It is further noted that memory 119 may be housed in a common controller housing with the one or more processors 118. In an alternative embodiment, the memory 119 may be located remotely with respect to the physical location of the one or more processors 118, controller 117, and the like. In another embodiment, the memory 119 maintains program instructions for causing one or more processors 118 to carry out the various steps described through the present disclosure.

In one embodiment, a user interface 120 is communicatively coupled to the controller 117. In one embodiment, the user interface 120 may include, but is not limited to, one or more desktops, tablets, smartphones, smart watches, or the like. In another embodiment, the user interface 120 includes a display used to display data of the gasification system 100 to a user. The display of the user interface 120 may include any display known in the art. For example, the display may include, but is not limited to, a liquid crystal display (LCD), an organic light-emitting diode (OLED) based display, or a CRT display. Those skilled in the art should recognize that any display device capable of integration with a user interface 120 is suitable for implementation in the present disclosure. In another embodiment, a user may input selections and/or instructions responsive to data displayed to the user via the user interface 120.

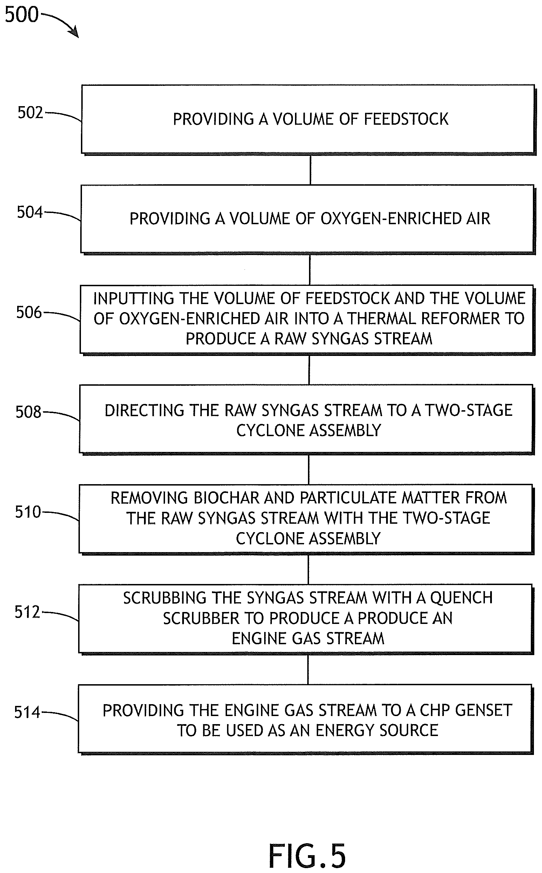

FIG. 5 illustrates a flowchart of a method 500 for operating an enriched air gasification system 100, in accordance with one or more embodiments of the present disclosure. It is noted herein that the steps of method 500 may be implemented all or in part by gasification system 100 and/or system 200. It is further recognized, however, that the method 500is not limited to gasification system 100 and/or system 200, in that additional or alternative system-level embodiments may carry out all or part of the steps of method 500.

In a step 502, a volume of feedstock is provided. The volume of feedstock may include a volume of any feedstock known in the art including, but not limited to, animal manure (e.g., poultry manure, swine manure, dairy manure, cattle manure, and the like), anaerobic digestor effluent sludge (e.g., biogas plant effluent sludge), woodwaste, plastic, cardboard, refused derived fuel, tires, coal, concentrated rare earth elements recovered from ash, and the like.

In a step 504, a volume of oxygen-enriched air is provided. The volume of oxygen-enriched air may include a variety of oxygen content levels including, but not limited to, 10% oxygen, 30% oxygen, 40% oxygen, 80% oxygen, and the like. By way of another example, the volume of oxygen-enriched air may include atmospheric air including minimal or no oxygen enrichment.

In a step 506, the volume of feedstock and the volume of oxygen-enriched air are inputted into a thermal reformer 103 to produce a raw syngas stream 206. The thermal reformer 103 reformer may include any type of thermal reformer known in the art. For example, the thermal reformer 103 may include a thermal reformer with a single bubbling bed gasifier configuration. In embodiments, the thermal reformer 103 may be pre-heated to a temperature at or near an operating temperature before the volumes of feedstock and oxygen-enriched air are input into the thermal reformer 103. For example, the thermal reformer 103 may be configured to receive a start-up fuel stream 205 which may be used by a start-up burner 135 to pre-heat the thermal reformer 103.

In a step 508, the raw syngas stream 206 is directed to a two-stage cyclone assembly. For example, the two-stage cyclone assembly may include a Stage 1 cyclone 104 and a Stage 2 cyclone 105. In embodiments, a temperature indicator 140 and a pressure indicator 141 at or near the top of the thermal reformer 103 may be configured to measure the temperature and pressure of the raw syngas stream 206 exiting the thermal reformer 103.

In a step 510, biochar and particulate matter are removed from the raw syngas stream with the two-stage cyclone assembly. The two-stage cyclone (e.g., Stage 1 cyclone 104 and the Stage 2 cyclone 105) may be configured to continuously remove biochar and other particulates from the raw syngas stream 206. In embodiments, Stage 1 cyclone 104 is configured to remove the majority of the biochar and particulate matter from the raw syngas stream 206. In further embodiments, the Stage 2 cyclone 105 is configured to remove fine biochar and particulate matter from the Stage 1 cyclone exit stream 207 which was not removed by the Stage 1 cyclone 104.

In a step 512, the syngas stream is scrubbed with a quench scrubber to produce an engine gas stream. For example, a quench scrubber 107 may be configured to receive a syngas stream (e.g., cool syngas stream 215) from the two-stage cyclone assembly and scrub the syngas stream with a recirculating quench water stream 221 in order to produce a engine gas stream 218. In embodiments, the syngas stream from the two-stage cyclone assembly may be cooled prior to entering the quench scrubber 107. For example, a hot syngas stream 208 from the Stage 2 cyclone 105 may be cooled with a syngas cooler 106 to produce a cool syngas stream 215 which may be fed into the quench scrubber 107.

In a step 514, the engine gas stream is provided to a CHP genset to be used as an energy source. In some embodiments, the engine gas stream 218 may be heated with a fuel gas heater 108 to produce a product engine gas stream 224 which may be fed to a CHP genset 109. It is contemplated herein that the product engine gas stream 224 may be used as a fuel source to produce heat and/or steam, and may be used to power one or more internal combustion gas engines.

The herein described subject matter sometimes illustrates different components contained within, or connected with, other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "connected," or "coupled," to each other to achieve the desired functionality, and any two components capable of being so associated can also be viewed as being "couplable," to each other to achieve the desired functionality. Specific examples of couplable include but are not limited to physically mateable and/or physically interacting components and/or wirelessly interactable and/or wirelessly interacting components and/or logically interacting and/or logically interactable components.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

## Claims

1. A method for enriched air gasification, comprising:
providing a volume of feedstock and a volume of oxygen-enriched air to a thermal reformer;
reacting the volume of feedstock and the volume of oxygen-enriched air with the thermal reformer at an operating temperature to produce a raw syngas stream;
removing particulate matter from the raw syngas stream with a two-stage cyclone assembly, wherein the two-stage cyclone assembly comprises a first cyclone and a second cyclone;
scrubbing the raw syngas stream received from the two-stage cyclone assembly with a quench scrubber to produce an engine gas stream; and
providing the engine gas stream to a CHP genset to be used as fuel.

2. An enriched air gasification system, comprising:
a thermal reformer configured to receive a volume of feedstock and a volume of oxygen-enriched air, wherein the thermal reformer is configured to react the volume of feedstock and the volume of oxygen-enriched air at an operating temperature to produce a raw syngas stream;
a two-stage cyclone assembly including a first cyclone and a second cyclone, wherein the two-stage cyclone assembly is configured to remove particulate matter from the raw syngas stream;
a quench scrubber configured to receive and scrub the raw syngas stream received from the two-stage cyclone assembly to produce an engine gas stream; and
a CHP genset configured to receive the engine gas stream and use the engine gas stream as fuel.

3. The system of Claim 2, wherein the thermal reformer comprises a thermal reformer with a single bubbling bed gasifier configuration.

4. The system of Claim 2, wherein the volume of oxygen-enriched air comprises both a fluidization medium and a gasification reactant.

5. The system of Claim 2, wherein the operating temperature is between 600°C and 800°C

6. The system of Claim 2, wherein the thermal reformer is configured to react the volume of feedstock and the volume of oxygen-enriched air at substantially atmospheric pressure.

7. The system of Claim 6, wherein the volume of feedstock comprises a volume of feedstock with an ash content level between 10 and 35%.

8. The system of Claim 2, wherein the first cyclone comprises a high-efficiency cyclone, and the second cyclone comprises a low-efficiency cyclone.

9. The system of Claim 2, wherein the volume of feedstock comprises volume of at least one of poultry manure, swine manure, cattle manure, biogas plant effluent sludge, woodwaste, plastic, and tires.

10. The system of Claim 2, wherein the volume of oxygen-enriched air comprises a volume of air with an oxygen content level between 30 and 90 percent.

11. The system of Claim 2, further comprising a fuel gas heater, wherein the fuel gas heater is configured to heat the engine gas stream and provide a heated engine gas stream to the CHP genset.

12. The system of Claim 2, further comprising a syngas cooler configured to cool the raw syngas stream received from the two-stage cyclone assembly.

13. The system of Claim 2, further comprising a caustic scrubber configured to scrub the engine gas stream to remove carbon dioxide (CO₂).

14. The system of Claim 2, further comprising an internal combustion engine, wherein the internal combustion engine is configured to receive a volume of engine gas from the engine gas stream and combust the volume of engine gas.

15. An enriched air gasification system, comprising:
a gasification subsystem, comprising:
a thermal reformer configured to receive a feedstock stream and an oxygen-enriched air stream, wherein the thermal reformer is configured to react the feedstock stream and the oxygen-enriched air stream at an operating temperature to produce a raw syngas stream;
a two-stage cyclone assembly including a first cyclone and a second cyclone, wherein the two-stage cyclone assembly is configured to remove particulate matter from the raw syngas stream;
a quench scrubber configured to receive and scrub the raw syngas stream received from the two-stage cyclone assembly with a quench water recirculation loop to produce an engine gas stream; and
a CHP genset configured to receive the engine gas stream and use the engine gas stream as fuel; and
a controller communicatively coupled to the gasification subsystem, wherein one or more processors of the controller are configured to execute a set of program instructions, the set of program instructions configured to cause the one or more processors to:
adjust the flowrate of feedstock stream and the flowrate of the oxygen-enriched air stream;
adjust the operating temperature of the thermal reformer based on one or more characteristics of the feedstock stream; and
adjust a flowrate of the quench water recirculation loop based on a temperature of the engine gas stream.
